# EUROPEAN PATENT APPLICATION

(11) **EP 3 782 796 A1**
(43) Date of publication of application: **24.02.2021**
(21) Application number: 20181887.9
(22) Date of filing: 24.06.2020
(51) Int. Cl.: B29C 63/02, B32B 38/18, B26D 7/00

(54) **SYSTEM AND METHOD FOR APPLYING PROTECTIVE FILM ON CERAMIC PARTS**

(30) Priority: 19.08.2019 ES 201930747
(71) Applicant: Mecánicas Sercas, S.L., 12200 Onda (Castellón) (ES)
(72) Inventor: ÁLVARO SERRANO, Rafael, 12200 Onda (Castellón) (ES)
(74) Representative: Ungria López, Javier

(57) **Abstract**

System and method for applying protective film on ceramic parts. In the system, the ceramic parts move with a separating gap (E) between parts and the system comprises a device (D) for continuously supplying protective film (2), compression rollers between which the ceramic parts (1) move and a cutting head (4) with blades (5) for cutting the film (2) between ceramic parts (1). It has a vertically-movable lifting mechanism (3), such that in a lifted position it lifts the film that is on it, tensioning it during the transverse cutting of the film (2) by the blades (5). A method for applying protective film in said system is also described.

## Description

### OBJECT OF THE INVENTION

The present invention relates to the technical field of packaging objects with a covering on one face that can be detachable. More specifically, it describes a machine and a method for applying a protective film on one face of a ceramic part, such as a tile or similar. The film is applied by leaving a peripheral margin of the part uncovered and preventing the appearance of defects and air bubbles between the film and the ceramic part.

### BACKGROUND OF THE INVENTION

It is known that glass surfaces, ceramic surfaces, tiles, etc. can be easily scratched. For this reason it is necessary to take certain precautions during the storage and transportation of tiles for wall coverings, floor tiles and/or ceramic flooring and parts with delicate surfaces (such as parts with the appearance of marble).

Therefore, it is recommended that a protective film be placed on said surfaces in order to prevent scratches post-manufacture and specially to prevent the damage usually caused in the transportation and the handling process for the placement thereof on walls, floors, windows, doors, etc. Once the part itself has been installed, the protective film is removed.

Several solutions are known from the state of the art for applying the protective film to parts of this type that are sensitive to scratching. For example, US2006127612 describes a machine and method for applying a protective sheet on the surface of a glass panel of a window or door. The sheet protects against possible damage during all the handling of the panel until the assembly in the window or door frame. The sheet does not reach the edge of the panel, but rather leaves an area with a small width of the entire perimeter uncovered. This is done to facilitate the fitting operation inside the frame and to prevent any traces of sheet from remaining on the edge that would affect the seal between the panel and the frame. The method is performed in three stations between which the panels to be received move and wherein the sheet is adhered, the sheet cutting lines are prepared by means of a laser and the excess portion is removed after cutting. In this machine, the film is placed beneath the part.

US3944461 describes a system for continuously applying a sheet on glass panels wherein the sheet is used to make the glass shatterproof. The sheet is applied on the entire surface of the glass, without leaving uncovered margins. The described cutting system performs the cutting between two successive parts. In this system, the film is like a sticker; the adhesive portion is placed on the glass and the portion without adhesive is collected on another roller.

Document US5599422 is also known, which describes a machine and method for coating a glass panel with a temporary protective sheet which leaves a peripheral area of the glass panel uncovered. The area left uncovered is the area of the glass that will be inserted into the window/door frame during the assembly. The protective sheet is applied continuously on individual panels that are passed through rollers, which press the sheet against the panels for the correct adhesion thereof. Subsequently, a line of blades performs longitudinal cuts and subsequently another line of blades performs transverse cuts. The cut portion is removed by an operator. This machine is designed to place the film on both faces of the part.

EP0695623 describes an apparatus for placing a protective sheet on one face of a slab or similar which has been previously polished. The sheet is applied by means of a pressure roller and the cutting system of the sheet comprises an upper portion that has the possibility of vertical movement and a lower portion which is fixed. When the upper portion descends, the sheet is pressed against the lower portion and then a blade acts to make the cut. This machine does not leave an uncovered perimeter margin on the part.

### DESCRIPTION OF THE INVENTION

The present invention describes a system and a method for applying protective film on ceramic parts which prevents the appearance of air bubbles between the surface to be protected and the protective film itself.

Throughout the description, the term film is used as an equivalent to a thin sheet, generally made of plastic, which is intended to be joined to an upper face of the part in order to prevent possible scratches or impacts. In this case, the film further has an adhesive or is made of a material which, when it comes in contact with the ceramic of the part, remains adhered to it.

Preferably, the described system and method enable a perimeter margin of the ceramic part to be left free of coating. In a preferred embodiment, said perimeter margin is between 2 mm and 3 mm, more preferably 2 mm or 3 mm. The objective is to facilitate the correct placement of the ceramic part on a wall or floor by joining two adjacent parts, leaving a minimum surface of the part exposed (in this case the perimeter margin).

The most relevant technical problems solved by the present invention are that of optimising the placement of the film on the part, preventing the appearance of air bubbles between the film and the part and ensuring that the ends of the film are properly adhered to the part, without wrinkles or defects; and that of performing the transverse cutting of the film.

The present invention enables the problems associated with the transverse cutting operations of the protective film, once it is arranged on the ceramic parts, to be solved in a simple manner without needing to use solutions with lasers or similar. This is especially essential in factories for producing ceramic tiles since the production speed in lines in factories of this type is critical and the cleaning conditions are poor.

The system comprises a device for supplying protective film, and upper compression rollers and lower compression rollers, between which the parts move, to ensure that the dispensed film is properly adhered on an upper face of the parts. Said parts move in the system in line but with a certain separation between them, which in the future will be called the separating gap between parts. The film is applied continuously, for which reason there is protective film in the separating gap between parts, although it is not joined to anything.

The system comprises a lifting mechanism which is facing a cutting head with blades. The lifting mechanism has the possibility of movement in the vertical direction such that, when it moves away from the cutting head and is in the retracted position, the passage of the ceramic parts (with the protective film) is enabled between the cutting head and the lifting mechanism. The separating gap between parts must be regulated when the parts are introduced into the system such that the width of the lifting mechanism and the separation of the blades is related to the separating gap between parts. Said gap must be sufficient so that the lifting mechanism, in a lifted position, may pass between two parts and lift the film, tensioning it. The separation between blades determines the peripheral margin that is left free (without film) on the ceramic parts.

When the lifting mechanism is in a lifted position, with the film tensioned, the blades of the cutting head are in contact with the film, cutting it. The cutting of the film, which is performed in two places (due to the fact that there are two blades), determines a rear end and a front end of the film.

Additionally, the system may comprise an additional upper compression roller which is arranged near the area wherein the cutting of the film is performed, determining a front end of the film. In other words, it is arranged near the area wherein the lifting mechanism and the cutting head of the system are located. This additional upper compression roller has at least horizontal movement such that, after the cutting of the film has been performed, the roller moves horizontally, towards the end of the film which has been cut, on the upper face of the part and that determines the front end. In this manner, it is ensured that said end is properly adhered to the part and is not lifted or that wrinkles are not formed thereon when it passes through the following upper compression roller.

Preferably, the system comprises parallel positioning guides, between which the ceramic parts to be protected are located fitted laterally. As previously described, the ceramic parts move through the system leaving a certain separating gap between them (gap free of parts). Furthermore, the parallel lateral guides, together with the position of the device for supplying protective film, centred with respect to said guides, enable the perimeter margin of the parts to be left free of film.

Likewise, a method is proposed for applying protective film to ceramic parts in a system, as previously described. The method comprises at least one step of moving the parts with film arranged on the upper face thereof until a first part is on one side of the cutting area and a second part is on the other side of the cutting area, separated from each other by a separating gap between parts. Subsequently, the lifting mechanism is moved from the retracted position to the lifted position, lifting the film which is in the cutting area such that the blades of the cutting head cut the film. Finally, the blades move along the cutting head, in a certain movement and cutting direction, in order to perform the transverse cutting of the film. Thus, the transverse cutting of the film is performed in two cutting lines, corresponding to the ends of the film in the first part and the second part, and the film, which is tensioned by the lifting mechanism during the cutting operation, retracts when it is cut and thus adheres better to the corresponding ceramic part.

### BRIEF DESCRIPTION OF THE FIGURES

To complete the description of the invention, and for the purpose of helping to make the features thereof more readily understandable, according to a preferred exemplary embodiment thereof, a set of drawings is included where, by way of illustration and not limitation, the following figures have been represented:
Figure 1 shows a schematic elevation view of the system for applying protective film on ceramic parts.
Figure 2 shows a detailed view of a ceramic part, in this case a floor tile, with the film already arranged thereon. The perimeter margin free of film is clearly visible.
Figure 3 shows a view of the cutting head with the mechanism and the pivoting teeth. In this case, only one of the pivoting teeth is observed.
Figure 4 shows a schematic plan view of the system for applying protective film on ceramic parts.

### DETAILED DESCRIPTION OF THE INVENTION

The present invention discloses a system and a method for applying protective film on ceramic parts which enables the film to be applied continuously on independent flat ceramic parts. Said ceramic parts move successively in single file, with a certain separation between them, along the system. The separation between parts is defined as the separating gap between parts (E) and is the gap which remains between a first part and a second part, both being parts that move one after the other through the system.

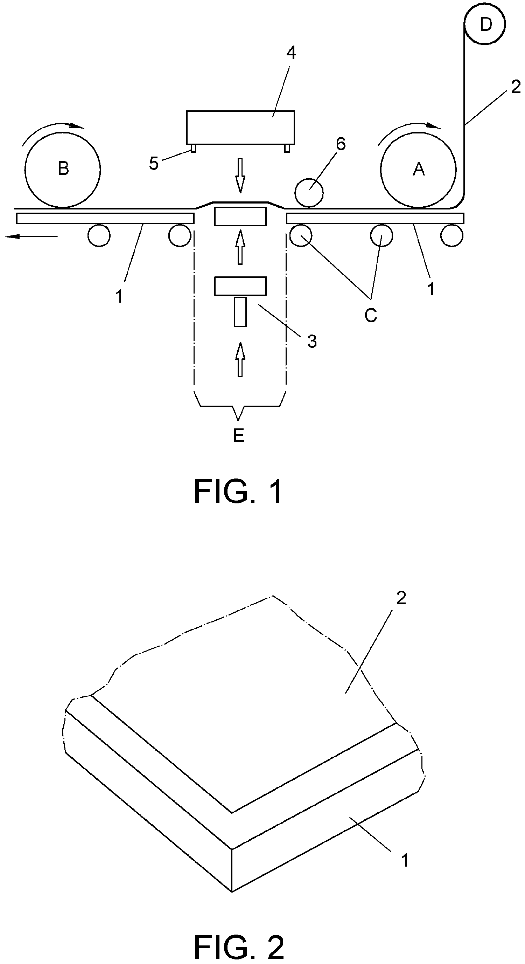

As seen in figure 1, the system comprises a device (D) for continuously supplying protective film (2) and upper compression rollers (A, B) and lower compression rollers (not shown in the figures) between which the ceramic parts (1) move. The film (2) is applied to the ceramic part on an upper face to be protected. In an exemplary embodiment, the upper compression rollers (A, B) are rubberised, i.e. covered by a layer of rubber. The system may also comprise transport rollers (C) as seen in said figure 1.

The device (D) is arranged before to a first upper compression roller (A) such that the film (2) which is placed on the upper face of the ceramic part (1) stays adhered to said upper face when it is pressed by the first upper compression roller (A) when the ceramic part (1) passes between said roller (A) and at least one lower compression roller facing each upper compression roller (i.e. coinciding in the same vertical line). The system comprises a cutting head (4) with lateral blades (5) configured to cut the film between ceramic parts (1).

In the system, the film is continuously placed on the parts while the parts move separated from each other, leaving a separating gap between parts (E) as shown in figure 1.

The system comprises a lifting mechanism (3) with the possibility of vertical movement between a retracted position and a lifted position, such that in the lifted position it lifts the film that is on it, tensioning it. This tensioning of the film achieves that, when the cutting is performed with the cutting head, the film retracts and facilitates the adhesion thereof to the corresponding ceramic part.

When the lifting mechanism (3) is in the lifted position, the blades (5) of the cutting head (4) are in contact with the protective film (2). Said blades have the possibility of movement along the cutting head (4) such that, when they move through it, they cut the film in the transverse direction thereof. In other words, the blades (5) move in a direction transverse to the advance direction of the parts (1) in the system. Preferably, they move and cut in either in forward and inward direction of said advance direction.

Thus, the lifting mechanism and the cutting head are used between pairs of parts, wherein a first part has already passed through the cutting area (between the lifting mechanism and the cutting head) and a second part has not yet passed through the cutting area. Preferably, as seen in the figure, the system comprises the first upper compression roller (A) arranged before the cutting area and a second upper compression roller (B) arranged after the cutting area. Preferably, the cutting is performed when the first part has come into contact with the second upper compression roller (B) and the first part is coming out of contact with the first upper compression roller (A). At this time, the separating gap between parts (E) coincides with the cutting area.

Preferably, the blades (5) of the cutting head (4) are arranged separate and parallel to each other as seen in figure 1. Each of the blades (5) cuts the film (2) in a cutting line which determines ends of the film corresponding with a rear end of the film of the first part and with a front end of the film of the second part.

In a possible embodiment, the blades (5) are separated from each other by a distance corresponding to the sum of the width of the separating gap between parts (E) and a perimeter margin free of film of the first part and the second part. Figure 2 shows a ceramic part (1), in this case a floor tile, wherein the perimeter margin free of film (2) is seen.

The device (D) for supplying film (2) can comprise removable tensioning rollers between which the film (2) passes, configured to tension said film (2) and ensure a better arrangement thereof on the parts (1).

Preferably, as shown in figure 1, the system comprises an additional upper compression roller (6) which has the possibility of movement in the horizontal direction. Said additional upper compression roller (6) is arranged between the first upper compression roller (A) and the cutting area. In the movement thereof, it goes from a resting position to an end position wherein it extends over the front end of the film of the second part. The objective is to prevent the front end of the film of the second part from lifting as it passes through the second upper compression roller (B) which is facing the advance movement of the parts (1) in the system.

Additionally, the additional upper compression roller (6) can have the possibility of movement in the vertical direction, going from a low position wherein it is in contact with the film (2) arranged on the parts (1) and a high position wherein it is not in contact with said film (2).

To ensure a correct centring of the parts (1) along the system, the system can comprise parallel movement guides, which extend along the entire system and are configured to receive the ceramic parts (1) and align them. The guides can further be used to determine the margin of the part (1) that is free of protective film (2). To do this, in a preferred embodiment, the width of the parallel movement guides coincides with the perimeter margin that is to be left free of protective film (2). In an exemplary embodiment, it is 2 mm or 3 mm.

A technical problem that arises when the excess film is cut in the cutting area, i.e. the film that had been arranged between parts, is that said excess material must be removed. In order to solve this problem, the system of the present invention may comprise, in the cutting head (4), at least one pivoting tooth (7) with the possibility of pivoting between a resting position and a film removal position to which it moves after the blades (5) have passed.

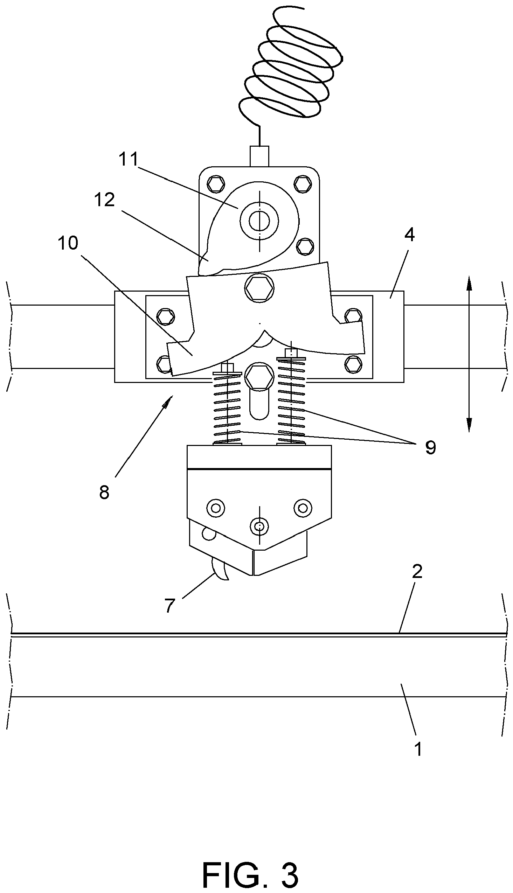

The movement of the tooth or teeth (7) is performed by means of a pivoting mechanism (8), as shown in figure 3. Said pivoting mechanism (8) may comprise springs (9), which control the position of the teeth (7) and which are linked to a rocker arm (10) which is in turn actuated by a rotating part (11) which has at least one projection (12). With the movement of the rotating part (11), the projection (12) comes into contact with the rocker arm (10) making it tilt, thereby pressing on one of the springs (9). Depending on the spring (9) which is pressed, one of the teeth (7) linked to said spring (9) unfolds.

It preferably comprises two pivoting teeth (7), separated and facing each other, each one associated with a movement and cutting direction of the blades (5).

Thus, after the blades have passed, depending on the direction wherein said blades have moved, the corresponding pivoting tooth (7) moves to remove the excess film (2) (the movement is performed from the resting position to the film removal position). The pivoting teeth (7) are preferably claw-shaped with one end of the claw facing the inside of the cutting head (4). Thus, the end of said claw holds the film (2) from a lower face thereof and, with the pivoting movement, moves it upwards in order to remove it from the cutting area.

Subsequently, the excess pieces of film can be left accumulated at the ends or the system may have a suction or vacuum element to prevent the accumulation of this waste (pieces of film). In this case, the suction element is in correspondence with the cutting area and is configured to suction the film (2) that has been cut by the blades (5).

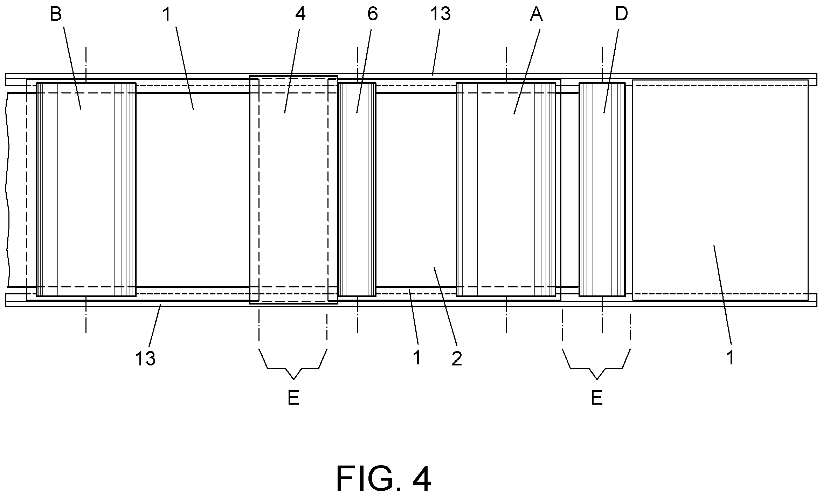

Figure 4 shows a schematic plan view of the system of the invention wherein the most representative elements of said system can be seen. In this case, three ceramic parts (1) are shown in the system. A first part is already in contact with the second upper compression roller (B), a second part is coming out of contact with the first upper compression roller (A) and a third part has not yet come into contact with any of the upper compression rollers. Between the first and second parts and between the second and third parts, the separating gap between parts (E) can be seen.

Likewise, figure 4 shows the lateral movement guides (13). As seen in the figure, the guides (13) extend along the system. They guarantee the correct positioning of the parts (1) with respect to the compression rollers (A, B) and especially with respect to the device (D) for supplying protective film (2), in order to ensure that the margin of the parts (1) remains free of film (2).

Another object of the invention is a method for applying protective film on ceramic parts in a system like the one described previously. The method comprises at least the following steps:
a) moving the parts (1) with film (2) arranged on the upper face thereof until a first part is on one side of the cutting area and a second part is on the other side of the cutting area, separated from each other by a separating gap between parts (E);
b) moving the lifting mechanism (3) from the retracted position to the lifted position, lifting the film (2) which is in the cutting area, such that the blades (5) of the cutting head (4) stay in contact with the film (2);
c) moving the blades (5) along the cutting head (4), in a certain movement and cutting direction, in order to perform the transverse cutting of the film (2).

The method may comprise an initial step, prior to step a), of introducing the ceramic parts (1) into the parallel positioning guides.

When the cutting has been performed, the cutting head (4) and the lifting mechanism (5) return to the original positions thereof so that the parts can continue advancing through the system. Preferably, step a) comprises moving the parts (1) until the first part has come into contact with the second upper compression roller (B) and the second part is coming out of contact with the first upper compression roller (A). At this time, the compression rollers (A, B) stop and remain stopped during the cutting operation.

Preferably, after step d) wherein the transverse cutting of the film (2) is performed, the cutting line of the blade (5) determines an end of the film corresponding to a front end of the film of the second part and a step e) is performed of moving the additional upper compression roller (6) in a horizontal direction from a resting position to an end position wherein it extends over the front end of the film (2) of the second part.

In the cases wherein this step of moving the additional upper compression roller (6) is performed, a step of moving a pivoting tooth (7) is carried out previously, associated with the movement direction of the blades (5), from a resting position to a film removal position (2). Furthermore, the film (2) that has been cut by the blades (5) (and in the corresponding cases, that has been removed by the pivoting teeth (7)) can be suctioned in a suction stage. This step is performed with a suction element arranged correspondence with the cutting area.

## Claims

1. A system for applying protective film on ceramic parts of the type that comprise an upper face to be protected, wherein the ceramic parts move with a separating gap between parts (E) determined as the gap left between a first part and a second part, and wherein the system comprises at least:
- a device (D) for continuously supplying protective film (2);
- upper compression rollers (A, B) and lower compression rollers between which the ceramic parts (1) move;
wherein the device (D) is arranged before to a first upper compression roller (A) such that the film (2) which is arranged on the upper face of the ceramic part (1) stays adhered to said upper face when it is pressed by the first upper compression roller (A) when the ceramic part (1) passes between said roller (A) and at least one lower compression roller;
- a cutting head (4) with at least one blade (5) configured to cut the film between ceramic parts (1);
and the system is **characterised in that** it comprises a cutting area, coinciding with the separating gap between parts (E), wherein the cutting head (4) and a lifting mechanism (3) facing said cutting head (4) are located and:
- the lifting mechanism (3) has the possibility of vertical movement between a retracted position and a lifted position, such that in the lifted position it lifts the film that is on it, tensioning it;
- the cutting head (4) has two blades (5) and, when the lifting mechanism (3) is in the lifted position, the blades (5) of the cutting head (4) contact the protective film and said blades have the possibility of movement along the cutting head (4) such that, when they move through it, they cut the film in the transverse direction thereof.

2. The system for applying protective film on ceramic parts according to claim 1, wherein the blades (5) are arranged separate and parallel to each other such that each of them cuts the film (2) in a cutting line which determines film ends corresponding to a rear end of the film of the first part and a front end of the film of the second part.

3. The system for applying protective film on ceramic parts according to any one of the preceding claims, wherein the blades (5) move through the cutting head and perform the cutting in a direction transverse to the advance direction of the parts in forward and inward direction.

4. The system for applying protective film on ceramic parts according to any one of the preceding claims, wherein the blades (5) are separated from each other by a distance corresponding to the sum of the width of the separating gap between parts (E) and a perimeter margin free of film of the first part and the second part.

5. The system for applying protective film on ceramic parts according to any one of claims 2 to 4, comprising an additional upper compression roller (6) which has the possibility of movement in the horizontal direction and which is arranged between the first upper compression roller (A) and the cutting area and in the movement thereof it goes from a resting position to an end position wherein it extends over the front end of the film of the second part.

6. The system for applying protective film on ceramic parts according to any one of the preceding claims, comprising parallel movement guides, which extend along the entire system and are configured to receive the ceramic parts and align them.

7. The system for applying protective film on ceramic parts according to claim 5, wherein the movement guides have a width coinciding with a perimeter margin free of film (2) of the parts (1).

8. The system for applying protective film to ceramic parts according to any one of the preceding claims, wherein the cutting head (4) comprises at least one pivoting tooth (7) with the possibility of pivoting between a resting position and a film removal position to which it moves after the blades (5) have passed.

9. The system for applying protective film on ceramic parts according to claim 8, comprising two pivoting teeth (7), each one associated with a movement and cutting direction of the blades (5).

10. The system for applying protective film on ceramic parts according to any one of claims 8 and 9, wherein the pivoting teeth (7) are claw-shaped and are oriented with the end of the claw towards the inside of the cutting head.

11. The system for applying protective film on ceramic parts according to any one of the preceding claims, comprising a suction element arranged in correspondence with the cutting area and configured to suction the film (2) that has been cut by the blades (5).

12. The system for applying protective film on ceramic parts according to any one of the preceding claims, **characterised in that** the device (D) for supplying film (2) comprises removable tensioning rollers between which the film passes (2) which are configured to tension said film (2).

13. A method for applying protective film to ceramic parts in a system like the one described in any one of claims 1 to 12, **characterised in that** it comprises the following steps:
a) moving the parts (1) with film (2) arranged on the upper face thereof until a first part is on one side of the cutting area and a second part is on the other side of the cutting area, separated from each other by a separating gap between parts (E);
b) moving the lifting mechanism (3) from the retracted position to the lifted position, lifting the film (2) which is in the cutting area, such that the blades (5) of the cutting head (4) stay in contact with the film (2);
c) moving the blades (5) along the cutting head (4), in a certain movement and cutting direction, in order to perform the transverse cutting of the film (2).

14. The method according to claim 13 wherein, step a) comprises moving the parts (1) until the first part has come into contact with the second upper compression roller (B) and the second part is coming out of contact with the first upper compression roller (A).

15. The method according to any of claims 13 to 14 wherein, after step d) wherein the transverse cutting of the film (2) is performed, the cutting line of the blade (5) determines an end of the film corresponding to a front end of the film of the second part and a step e) is performed of moving the additional upper compression roller (6) in a horizontal direction from a resting position to an end position wherein it extends over the front end of the film (2) of the second part.

16. The method according to any one of claims 13 to 15, wherein, after step d) and before step e) in the cases wherein said step e) is carried out, a step is carried out of moving a pivoting tooth (7), associated with the movement direction of the blades (5), from a resting position to a film removal position.

17. The method according to any one of claims 13 to 16, comprising a step of suctioning the film (2) that has been cut by the blades (5) by means of a suction element arranged in correspondence with the cutting area.

18. The method according to any one of claims 13 to 17 comprises an initial step, prior to step a), of introducing the ceramic parts (1) into the parallel positioning guides.
